# EUROPÄISCHE PATENTANMELDUNG

(11) **EP 2 955 526 A1**
(43) Veröffentlichungstag der Anmeldung: **16.12.2015**
(21) Anmeldenummer: 14171722.3
(22) Anmeldetag: 10.06.2014
(51) Int. Cl.: G01N 35/00, G01N 35/10, B25J 9/16, G01B 21/04, G01B 7/00, G01N 35/04

(54) **Vorrichtung zur Positionsbestimmung einer Lehre und Verfahren zur Positionsbestimmung**

(71) Anmelder: Siemens Healthcare Diagnostics Products GmbH, 35041 Marburg (DE)
(72) Erfinder: Ziechner, Eike, 61273 Wehrheim (DE)

(57) **Zusammenfassung**

Die Erfindung betrifft eine Vorrichtung (10) zur Positionsbestimmung einer Lehre in einem automatischen Analysegerät und ein Verfahren zur Positionsbestimmung einer automatisch verfahrbaren Lehre in zwei unterschiedlichen Raumrichtungen X und Y, die jeweils senkrecht zur Längsachse der Lehre stehen.

## Beschreibung

Die Erfindung betrifft eine für ein Analysegerät geeignete Vorrichtung zur Positionsbestimmung einer Lehre und ein Verfahren zur Positionsbestimmung.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in-vitro Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie zum Transfer von Flüssigkeiten, wie z.B. Pipettiervorrichtungen mit Pipettiernadeln. Das Gerät umfasst eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen, in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Die Proben können einem Analysegerät in Probenentnahmeröhrchen zugeführt werden, die durch einen Verschluss, der mit einer Nadel durchstochen werden kann, verschlossen sind. Alternativ können die Probenentnahmeröhrchen auch offen sein bzw. vor Zuführung in das Analysegerät geöffnet werden. Teile der Probe oder die ganze Probe können dem Probenentnahmeröhrchen im Analysegerät mit einer automatisch verfahrbaren Nadel entnommen und in andere Behältnisse transferiert werden. Dabei ist eine genaue Ausrichtung der Nadel notwendig, da die Nadel die oft relativ kleine Öffnung bzw. den relativ kleinen Verschluss des Probenentnahmeröhrchens treffen muss und gleichzeitig den Rand des Probenentnahmeröhrchens nicht berühren soll, um beispielsweise ein Verbiegen der Nadel oder Verschleppung von Probenmaterial zu vermeiden. Ferner ist es notwendig, dass die Pipettiernadel die relativ kleinen Öffnungen von Küvetten, Waschstationen oder Niederhaltern präzise trifft. Moderne Analysegeräte können dazu mit einer Vorrichtung zur Positionsbestimmung für Pipettiernadeln ausgestattet sein. Mittels einer Vorrichtung zur Positionsbestimmung lassen sich Pipettiernadeln justieren und teilweise auch auf Verbiegungen, wie sie durch Abnutzung oder Kollisionen entstehen können, kontrollieren. Ferner lässt sich die korrekte Montage nach Auswechseln einer Pipettiernadel verifizieren, beispielsweise durch Bestimmung der Position der Pipettiernadelspitze. Gegebenenfalls kann auch eine Abweichung der Position der Pipettiernadelspitze von der Sollposition durch entsprechende Verfahrung der Pipettiernadel korrigiert werden.

Eine Vorrichtung zur Positionsbestimmung für Pipettiernadeln umfasst üblicherweise pro justierbarem Freiheitsgrad mindestens einen Referenzanschlagspunkt mit bekannten Positionskoordinaten, der gezielt angefahren werden kann. Zum Bestimmen der Position der Pipettiernadelspitze z.B. in X-, in Y- und in Z-Richtung ist es somit notwendig, dass die Pipettiernadel in alle drei Richtungen verfahrbar ist. In der Praxis stellt sich jedoch häufig das Problem, dass Pipettiernadeln z.B. nur in X-Richtung und in Z-Richtung verfahrbar sind, die Position der Pipettiernadelspitze jedoch in X-Richtung, Y-Richtung und Z-Richtung bestimmt werden soll. Üblicherweise erfolgt in solchen Fällen die Positionsbestimmung der Pipettiernadel von Hand durch einen geschulten Servicetechniker, was oft einen erheblichen Aufwand bedeutet und mit hohen Kosten verbunden ist.

Auch ist die Orientierung der Nadel nach einem Crash zu überprüfen, was vorteilhafterweise automatisiert durchgeführt wird um teure Arbeitszeit von Technikern einzusparen, insbesondere in den Nachtstunden.

DE 10 2008 058 065 A1 offenbart ein Verfahren und System zur Bestimmung der Position einer Pipettiernadelspitze in einer automatisierten Analysevorrichtung mittels Messung der elektrischen Kapazität eines Kondensators gebildet aus der elektrisch leitfähigen Pipettiernadel und einem elektrisch leitfähigen Messkörper.

In eine Vorrichtung zur Positionsbestimmung für eine Pipettiernadel kann anstelle einer Pipettiernadel auch eine Lehre montiert werden. Eine Lehre kann mit höherer Präzision gearbeitet sein als eine Pipettiernadel. Dies ermöglicht eine genauere Justage der Position der Halterung der Lehre und der Pipettiernadel.

Es ist Aufgabe der Erfindung, eine Vorrichtung zur Positionsbestimmung für Lehren zur Verfügung zu stellen, welche eine Positionsbestimmung der Lehre in zwei Raumrichtungen durch Verfahren der Lehre in nur einer Raumrichtung ermöglicht.

Die Aufgabe wird erfindungsgemäß durch die im Folgenden beschriebenen Verfahren und Gegenstände gelöst.

Es wurde gefunden, dass eine verbesserte Vorrichtung zur Positionsbestimmung für Lehren erreicht werden kann, wenn die Lehre innerhalb einer Aufnahmeposition mit einem Rand und mit einer speziell ausgestalteten Form verfahren wird.

Gegenstand der vorliegenden Erfindung ist eine Vorrichtung zur Positionsbestimmung einer automatisch verfahrbaren Lehre in zwei unterschiedlichen Raumrichtungen X und Y, die jeweils senkrecht zur Längsachse der Lehre stehen. Die besagte Vorrichtung umfasst
a) die Lehre;
b) eine Vorrichtung zum Verfahren der Lehre in der Raumrichtung X, die senkrecht zur Längsachse der Lehre steht;
c) eine Vorrichtung zum Verfahren der Lehre in einer Raumrichtung Z, die parallel zur Längsachse der Lehre verläuft;
d) einen Sensor zur Erkennung des Anschlags oder der Annäherung der Lehre an einen Gegenstand;
e) eine zumindest teilweise umrandete Aufnahmeposition für die Lehre, in die die Lehre durch ein Verfahren der Lehre in Raumrichtung Z zumindest teilweise einführbar ist.

Die zumindest teilweise umrandete Aufnahmeposition für die Lehre weist einen ersten Randabschnitt und einen zweiten Randabschnitt auf, wobei die Randabschnitte die Aufnahmeposition für die Lehre in Raumrichtung X derart begrenzen, dass die Aufnahmeposition für die Lehre in Raumrichtung X zwischen einer ersten gedachten Linie, die parallel zur Raumrichtung X verläuft und einer zweiten gedachten Linie, die parallel zur Raumrichtung X verläuft, streng monoton abnimmt.

Dies hat den Vorteil, dass die bisher notwendige Verfahrung der Lehre in zwei Raumrichtungen X und Y zur Positionsbestimmung in den zwei Raumrichtungen X und Y oder alternativ die aufwändige händige Positionsbestimmung, insbesondere auch nach dem Auswechseln von Lehren, entfallen können. Dadurch ergeben sich auch erhebliche Kostenvorteile.

Ferner kann eine Abweichung von der Senkrechtstellung der Lehre ermittelt werden, indem die Position der Lehre in Raumrichtung X und/oder Y an verschiedenen Stellen entlang der Lehre ermittelt wird. Dabei ist die Lehre auch in Raumrichtung Z und/oder -Z entsprechend zu verfahren.

Die Form der Aufnahmeposition für die Lehre ist dabei so ausgestaltet, dass die Ausdehnung der Aufnahmeposition in X eine eindeutige Zuordnung zu genau einer Position in Y ermöglicht. Dies wird dadurch erreicht, dass die Aufnahmeposition für die Lehre einen ersten Randabschnitt und einen zweiten Randabschnitt aufweist, die die Ausdehnung der Aufnahmeposition für die Lehre in Raumrichtung X derart begrenzen, dass die Ausdehnung der Aufnahmeposition für die Lehre in Raumrichtung X zwischen einer ersten gedachten Linie, die parallel zur Raumrichtung X verläuft und einer zweiten gedachten Linie, die parallel zur Raumrichtung X verläuft, streng monoton abnimmt.

In einer bevorzugten Ausgestaltung hat die Aufnahmeposition die Form eines Dreiecks, wobei die Aufnahmeposition so orientiert ist, dass eine Seite des Dreiecks in Raumrichtung X verläuft. Dabei ist besonders vorteilhaft, dass die Ausdehnung der Aufnahmeposition für die Lehre in Raumrichtung X zwischen einer ersten gedachten Linie, die parallel zur Raumrichtung X verläuft und einer zweiten gedachten Linie, die parallel zur Raumrichtung X verläuft, streng monoton und linear abnimmt. Ferner ist eine dreieckige Form der Aufnahmeposition vergleichsweise einfach und günstig zu realisieren.

In einer anderen bevorzugten Ausgestaltung hat die Aufnahmeposition die Form eines gleichschenkligen Dreiecks, wobei die Aufnahmeposition so orientiert ist, dass die Basis des gleichschenkligen Dreiecks in Raumrichtung X verläuft. Dabei ist besonders vorteilhaft, dass aufgrund der gleichschenkligen Ausführung des Dreiecks eine vergleichsweise große Fläche von der Aufnahmeposition umfasst wird, und somit auch nur vergleichsweise ungenau vorjustierte Lehren automatisch in die Aufnahmeposition verfahren und automatisch justiert werden können.

Vorteilhafterweise sind die Winkel des gleichschenkeligen Dreiecks in Abhängigkeit vom Durchmesser der Lehre so gewählt, dass der Verfahrweg der Lehre in Raumrichtung X zwischen den Schenkeln des Dreiecks bis zum jeweiligen Anschlag der Lehre an den Schenkeln sich in Abhängigkeit der Position der Lehre in Y so verhält, dass bei einer Veränderung der Position der Lehre in Raumrichtung Y um einen ersten Betrag, beispielsweise 1 mm, sich der Verfahrweg der Lehre in Raumrichtung X zwischen den Schenkeln des Dreiecks ebenfalls um den ersten Betrag verändert. Dabei können, je nach Wahl der Orientierung des Koordinatensystems, die Veränderung der Position der Lehre in Raumrichtung Y und die Veränderung des Verfahrwegs der Lehre in Raumrichtung X zwischen den Schenkeln des Dreiecks beispielsweise entweder das gleiche Vorzeichen oder jeweils das andere Vorzeichen aufweisen.

Durch den somit gegebenen, sehr einfachen Zusammenhang der Veränderung der Position der Lehre in Raumrichtung Y und der Veränderung des Verfahrwegs der Lehre in Raumrichtung X zwischen den Schenkeln des Dreiecks bedarf es somit keiner komplizierten, rechenzeitaufwändigen und teuren Rechnung um beispielsweise die Position der Lehre in Raumrichtung Y zu bestimmen bei gegebenem Verfahrweg der Lehre in Raumrichtung X zwischen den Schenkeln des Dreiecks.

In einer weiteren bevorzugten Ausgestaltung hat die Aufnahmeposition die Form eines Zweiecks, in der Form ähnlich einem gleichschenkligen Dreieck jedoch mit einem gerundeten Abschnitt zwischen den Schenkeln, wobei die Aufnahmeposition so orientiert ist, dass der der Basis eines gleichschenkligen Dreiecks entsprechende Abschnitt des Randes der Aufnahmeposition in Raumrichtung X verläuft. Dabei ist besonders vorteilhaft, dass aufgrund der in etwa gleichschenkligen Ausführung des Dreiecks eine vergleichsweise große Fläche von der Aufnahmeposition umfasst wird und somit auch nur vergleichsweise ungenau vorjustierte Lehren automatisch in die Aufnahmeposition verfahren und automatisch justiert werden können. Aufgrund des gerundeten Abschnitts zwischen den Schenkeln kann die Position der Lehre auch in diesem Abschnitt mit vergleichsweise hoher Genauigkeit ermittelt werden.

In einer weiteren bevorzugten Ausgestaltung hat die Aufnahmeposition die Form eine halben Kreisscheibe, wobei die Aufnahmeposition so orientiert ist, dass der radial verlaufende Abschnitt des Randes in Raumrichtung X verläuft. Aufgrund des gerundeten, nicht linearen Verlaufs des ersten und zweiten Randabschnittes der Aufnahmeposition kann die Position der Lehre mit vergleichsweise hoher Genauigkeit insbesondere mit zunehmendem Abstand vom radial verlaufenden Abschnitt des Randes, der in Raumrichtung X verläuft, ermittelt werden. Darüber hinaus weist die Aufnahmeposition aufgrund ihrer Form einer halben Kreisscheibe eine vergleichsweise große Ausdehnung in Raumrichtung X auf und ermöglicht daher die automatische Verfahrung einer insbesondere in Raumrichtung X nur vergleichsweise ungenau vorjustierten Lehre in die Aufnahmeposition und deren automatische Justage.

In einer weiteren bevorzugten Ausgestaltung hat die Aufnahmeposition die Form einer viertel Kreisscheibe, wobei die Aufnahmeposition so orientiert ist, dass einer der zwei radial verlaufenden Abschnitte des Randes in Raumrichtung X verläuft. Aufgrund des gerundeten, nicht linearen Verlaufs des ersten oder zweiten Randabschnittes der Aufnahmeposition kann die Position der Lehre mit vergleichsweise hoher Genauigkeit insbesondere mit zunehmendem Abstand vom radial verlaufenden Abschnitt des Randes, der in Raumrichtung X verläuft, ermittelt werden. Dabei ist besonders vorteilhaft, dass eine vergleichsweise große Fläche von der Aufnahmeposition umfasst wird, und somit auch nur vergleichsweise ungenau vorjustierte Lehren automatisch in die Aufnahmeposition verfahren und automatisch justiert werden können.

In einer bevorzugten Ausführung der Erfindung ist die automatisch verfahrbare Lehre als Kreiszylinder ausgestaltet.

In einer besonders bevorzugten Ausführung der Erfindung ist die automatisch verfahrbare Lehre als gerader Kreiszylinder ausgestaltet.

In einer besonders bevorzugten Ausführung der Erfindung ist die automatisch verfahrbare Lehre als Greifer ausgestaltet, der beispielsweise geeignet ist, Reaktionsgefäße und/oder Gefäße mit Reagenzien zu greifen.

In einer besonders bevorzugten Ausführung der Erfindung ist die automatisch verfahrbare Lehre eine Pipettiernadel. Vorteilhafterweise ist die Pipettiernadel in einer Halterung montiert, in die auch eine Lehre montiert werden kann.

In bevorzugten Ausgestaltungen ist der Querschnitt der Pipettiernadel rund oder annähernd rund oder oval oder annähernd oval.

Eine besonders bevorzugte Ausführung der Erfindung umfasst eine Vorrichtung zur Positionsbestimmung einer Lehre, wobei die Aufnahmeposition für die Lehre mit einer Waschstation für eine Pipettiernadel verbunden ist oder in eine Waschstation für die Pipettiernadel integriert ist oder als Waschstation für die Pipettiernadel ausgebildet ist.

Die Positionsbestimmung der Lehre kann so direkt vor, während und/oder nach einem Waschvorgang erfolgen. Dabei ist besonders vorteilhaft, dass keine zusätzlichen und damit zeitaufwändigen Verfahrwege zur Positionsbestimmung der Lehre zurückgelegt werden müssen, wodurch der Probendurchsatz eines Analysegerätes erheblich gesteigert werden kann. Dies ist besonders dann vorteilhaft, wenn die Lehre eine Pipettiernadel ist.

Ein weiterer Gegenstand der vorliegenden Erfindung ist ein Verfahren zur Positionsbestimmung einer automatisch verfahrbaren Lehre in zwei unterschiedlichen Raumrichtungen X und Y, die jeweils senkrecht zur Längsachse der Lehre stehen. Das Verfahren umfasst folgende Verfahrensschritte:
a) Einführen der Lehre in eine Aufnahmeposition durch Verfahren der Lehre in Raumrichtung Z, die parallel zur Längsachse der Lehre verläuft, wobei die Aufnahmeposition für die Lehre einen ersten Randabschnitt und einen zweiten Randabschnitt aufweist und wobei die Randabschnitte die Aufnahmeposition für die Lehre in Raumrichtung X derart begrenzen, dass die Aufnahmeposition für die Lehre in Raumrichtung X zwischen einer ersten gedachten Linie, die parallel zur Raumrichtung X verläuft und einer zweiten gedachten Linie, die parallel zur Raumrichtung X verläuft, streng monoton abnimmt;
b) Verfahren der Lehre in Raumrichtung X bis zur Annäherung oder zum Anschlag an den ersten Randabschnitt der Aufnahmeposition;
c) Verfahren der Lehre in Raumrichtung -X bis zur Annäherung oder zum Anschlag an den zweiten Randabschnitt der Aufnahmeposition;
d) Ermitteln des Abstands zwischen dem ersten Randabschnitt und dem zweiten Randabschnitt der Aufnahmeposition in Raumrichtung X entlang des Verfahrweges der Lehre;
e) Ermitteln der Position der Lehre in Raumrichtung Y durch Zuordnen des ermittelten Abstands zwischen dem ersten Randabschnitt und dem zweiten Randabschnitt der Aufnahmeposition in Raumrichtung X zu einer Position in Raumrichtung Y.

Durch das Verfahren der Lehre in Raumrichtung X bis zur Annäherung oder bis zum Anschlag an den ersten Randabschnitt der Aufnahmeposition wird eine erste Position X1 der Lehre in Raumrichtung X ermittelt. Durch Verfahren der Lehre in Raumrichtung minus X (-X) bis zur Annäherung oder bis zum Anschlag an den zweiten Randabschnitt der Aufnahmeposition wird eine zweite Position X2 der Lehre in Raumrichtung X ermittelt. Die Ausdehnung der Aufnahmeposition in Raumrichtung X ergibt sich aus dem Abstand von X1 und X2. Mittels der so ermittelten Ausdehnung der Aufnahmeposition in Raumrichtung X lässt sich aufgrund der bekannten Form und Orientierung der Aufnahmeposition auf die genaue Position der Lehre in Raumrichtung Y schließen. Die genaue Position der Lehre in Raumrichtung X ergibt sich durch Auswertung der Position X1 und der Position X2. Nach Abschluss der Positionsbestimmung kann die Lehre beispielsweise wieder aus der Aufnahmeposition heraus gefahren werden durch Verfahrung der Nadel in Raumrichtung minus Z.

Bei der Ermittlung und Auswertung des Abstands zwischen Position X1 und Position X2 ist vorteilhafterweise die Ausdehnung des Querschnitts der Lehre in den Raumrichtungen X und Y und gegebenenfalls die Form des Querschnitts der Lehre zu beachten. Die Ausdehnung der Lehre kann gegebenenfalls vernachlässigt werden, z.B. bei einer sehr dünnen Nadel oder wenn die akzeptable Toleranz bei der Positionsbestimmung relativ zur Ausdehnung des Querschnitts der Lehre groß ist.

Die Annäherung oder der Anschlag der Lehre an den Rand der Aufnahmeposition wird mittels eines geeigneten Sensors detektiert.

In bevorzugter Ausgestaltung wird die Annäherung oder der Anschlag der Lehre an den Rand der Aufnahmeposition mittels kapazitiver Messmethoden ermittelt. Dies ist insbesondere dann möglich, wenn die Lehre und der Rand der Aufnahmeposition aus einem elektrisch leitfähigen Material bestehen.

In alternativen Ausgestaltungen besteht dabei jeweils nur mindestens ein Randabschnitt der Aufnahmeposition und/oder mindestens ein Teil der Lehre aus einem elektrisch leitfähigen Material.

In einer alternativen Ausführung besteht der Rand der Aufnahmeposition und/oder die Lehre aus einem elektrisch leitfähigen Material.

Das Verfahren ist anwendbar, wenn die ungefähre Position der Lehre insoweit vorab bekannt ist, dass die Lehre in die Aufnahmeposition verfahren werden kann. Durch geeignete Wahl der Ausdehnung der Aufnahmeposition kann diese Bedingung erfüllt werden.

In einer ganz besonders bevorzugten Ausführungsform des erfindungsgemäßen Verfahrens zur Positionsbestimmung einer automatisch verfahrbaren Lehre ist die Aufnahmeposition für die Lehre als Waschstation für eine Pipettiernadel ausgebildet, und die Lehre wird vor, während oder nach der Bestimmung der Position der Lehre gewaschen.

Bei einer Aufnahmeposition für die Lehre, die als Waschstation für eine Pipettiernadel ausgebildet ist, kann es sich beispielsweise um eine entsprechend geeignete Waschstation selbst handeln, oder die Aufnahmeposition für die Lehre kann beispielsweise in eine Waschstation integriert sein oder mit einer Waschstation verbunden sein.

Ein anderer Gegenstand der Erfindung ist ein Analysegerät, welches eine vorgenannte erfindungsgemäße Vorrichtung zur Positionsbestimmung für Lehren umfasst.

Ein erfindungsgemäßes Analysegeräte umfasst vorteilhafterweise Vorrichtungen zum räumlichen Transfer von Messzellen, Reaktionsbehältern und Reagenzbehältern, wie z.B. Transferarme mit Greiffunktion, Transportbänder oder drehbare Transporträder, sowie zum Transfer von Flüssigkeiten, wie z.B. Pipettiervorrichtungen mit Pipettiernadeln. Ein erfindungsgemäßes Analysegerät umfasst vorteilhafterweise ferner eine Steuereinheit, die mittels entsprechender Software dazu in der Lage ist, die Arbeitsschritte für die gewünschten Analysen weitgehend selbstständig zu planen und abzuarbeiten.

Unter einer Pipettiernadel ist im Sinne der vorliegenden Erfindung eine Nadel, z.B. aus Metall oder elektrisch leitendem Kunststoff, zum Pipettieren von Flüssigproben und/oder von Flüssigreagenzien in einem Analysegerät zu verstehen.

Die Begriffe "Nadel" und "Pipettiernadel" werden synonym verwendet.

Unter einer "Probe" ist im Sinne der Erfindung das Material zu verstehen, dass die nachzuweisende Substanz (den Analyten), vermutlich enthält. Der Begriff Probe umfasst insbesondere biologische Flüssigkeiten von Menschen oder Tieren wie z.B. Blut, Plasma, Serum, Sputum, Exudat, bronchoalveoläre Lavage, Lymphflüsigkeit, Synovialflüssigkeit, Samenflüssigkeit, Vaginalschleim, Feces, Urin, Liquor, aber auch z.B. durch Homogenisation oder Zelllyse aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei Angaben bezüglich der Raumrichtungen X, Y, Z ist stets neben der genauen Raumrichtung auch die Raumrichtung gemeint, die um bis zu 20 Grad, bevorzugt um bis zu 10 Grad, sehr bevorzugt um bis zu 5 Grad, zur genauen Raumrichtung geneigt ist.

Die in den Figuren beispielhaft dargestellten Ausführungsformen sollen die vorliegende Erfindung veranschaulichen und sind nicht als Einschränkung zu verstehen. Darin enthalten:
- FIG. 1: eine Vorrichtung zur Positionsbestimmung für eine Lehre,
- FIG. 2-9: Aufnahmepositionen für eine Lehre, und
- FIG. 10-13: Diagramm des Ablaufs eines Verfahrens zur Positionsbestimmung.

Gleiche Teile sind in allen Figuren mit denselben Bezugszeichen versehen.

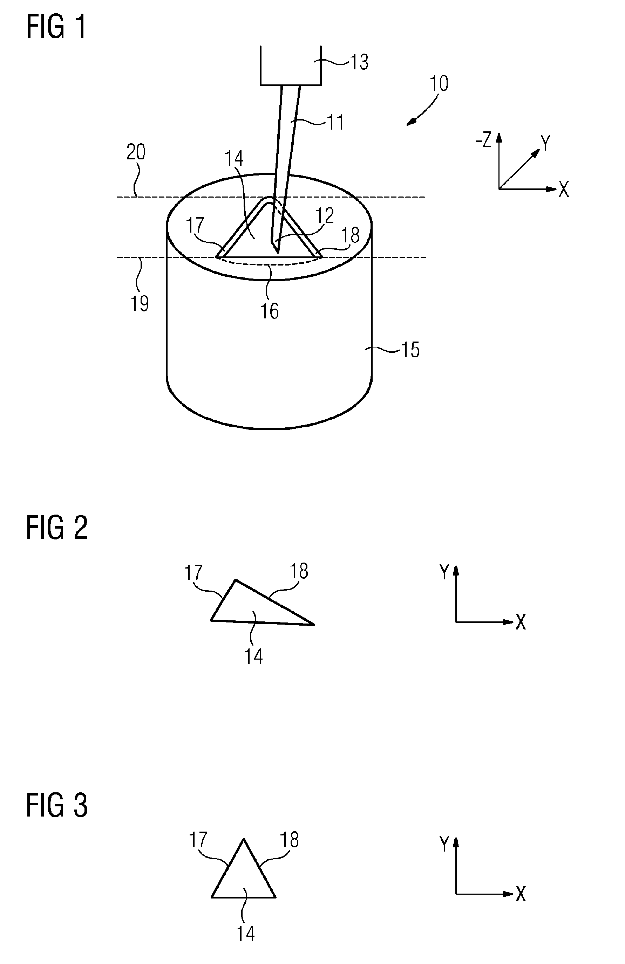

**FIG. 1** illustriert beispielhaft eine erfindungsgemäße Vorrichtung (10) zur Positionsbestimmung für eine Lehre, wobei die Lehre eine Pipettiernadel (11) mit einer Pipettiernadelspitze (12) ist. Die Vorrichtung (10) zur Positionsbestimmung ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Transporteinrichtungen sowie weiterhin eine Steuereinheit zum automatisierten Auswerten der Analysen.

Die Vorrichtung (10) zur Positionsbestimmung für eine Lehre umfasst eine Aussparung, die die Aufnahmeposition (14) für die Pipettiernadel (11) darstellt. Die Aufnahmeposition (14) weist einen Rand (16) auf und eine speziell ausgestaltete Form. Der Rand (16) verläuft teilweise parallel zu den gedachten Linien (19, 20) und weist einen ersten Randabschnitt (17) und einen zweiten Randabschnitt (18) auf. Die Pipettiernadel ist dabei wenigstens in den Raumrichtungen X und Z mittels der Aufhängung der Pipettiernadel (13) verfahrbar. Die Aufnahmeposition (14) für die Lehre ist in eine Waschstation (15) für die Pipettiernadel (11) integriert.

**FIG. 2** - **9** illustrieren beispielhaft verschiedene Ausführungsformen der Form des Randes (16) der Aufnahmeposition (14) für die Lehre sowie bevorzugte Orientierungen der Aufnahmeposition (14). Die Blickrichtung ist entlang Raumrichtung Z.
FIG. 2 zeigt eine Aufnahmeposition (14), die die Form eines Dreiecks aufweist.

FIG. 3 zeigt eine Aufnahmeposition (14), die die Form eines gleichschenkligen Dreiecks aufweist.

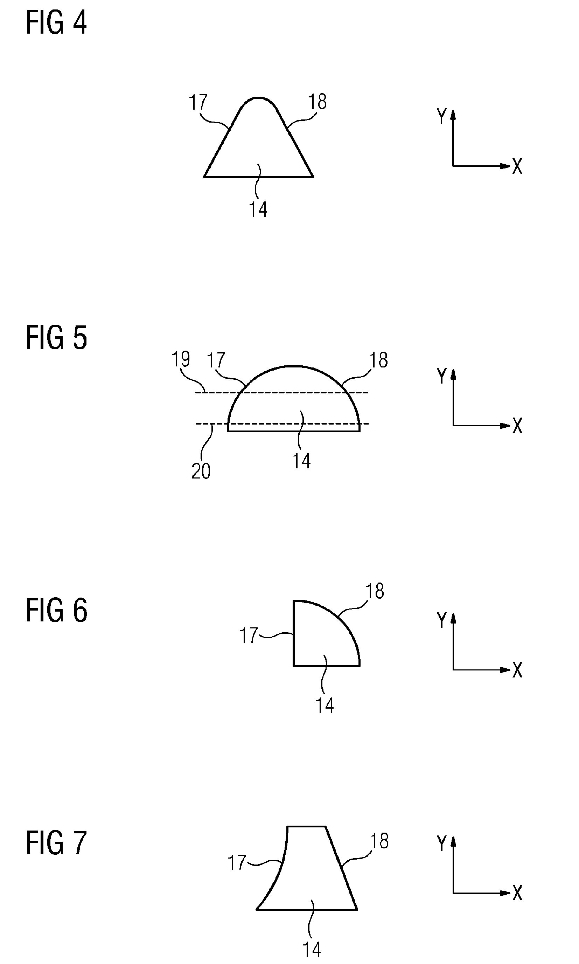

FIG. 4 zeigt eine Aufnahmeposition (14), die die Form eines Zweiecks, in der Form ähnlich einem gleichschenkligen Dreieck jedoch mit einem gerundeten Abschnitt zwischen den Schenkeln, aufweist.

FIG. 5 zeigt eine Aufnahmeposition (14), die die Form einer halben Kreisscheibe aufweist. Zusätzlich sind die gedachten Linien (19, 20) dargestellt.

FIG. 6 zeigt eine Aufnahmeposition (14), die die Form einer viertel Kreisscheibe aufweist.

FIG. 7 zeigt eine Aufnahmeposition (14), wobei der erste Randabschnitt (17) konvex gebogen verläuft, und der zweite Randabschnitt (18) gerade verläuft.

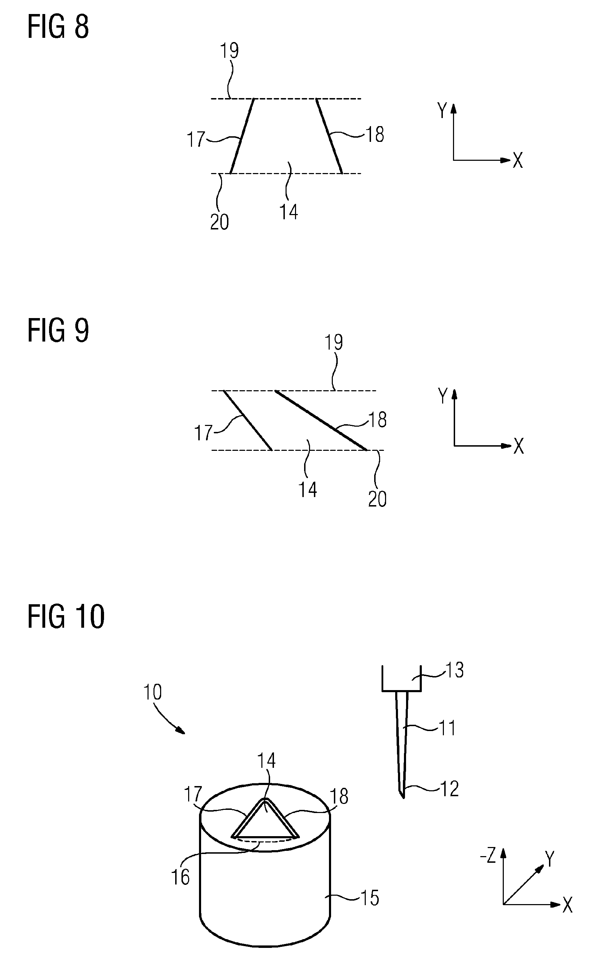

FIG. 8 zeigt eine Aufnahmeposition (14), die durch einen gerade verlaufenden ersten Randabschnitt (17) und einen gerade verlaufenden zweiten Randabschnitt (18), die zueinander charakteristisch geneigt sind, sowie durch die gedachten Linien (19, 20) begrenzt ist.

FIG. 9 zeigt eine Aufnahmeposition (14), die durch einen gerade verlaufenden ersten Randabschnitt (17) und einen gerade verlaufenden zweiten Randabschnitt (18), die zueinander charakteristisch geneigt sind, sowie durch die gedachten Linien (19, 20) begrenzt ist.

**FIG. 10-13** illustrieren beispielhaft verschiedene Schritte einer bevorzugten Ausführungsform des erfindungsgemäßen Verfahrens zur Positionsbestimmung einer Lehre. Die Schritte können teilweise auch in alternativen Reihenfolgen durchgeführt werden.

Dabei zeigt FIG. 10 eine Vorrichtung (10) mit einer Pipettiernadel (11) mit einer Pipettiernadelspitze (12) und einer Aufhängung (13) sowie eine Aufnahmeposition (14) mit einem ersten Randabschnitt (17) und einem zweiten Randabschnitt (18). Die Vorrichtung (10) ist in eine Waschstation (15) für die Pipettiernadel (11) integriert. Die Pipettiernadel (11) befindet sich außerhalb der Aufnahmeposition (14).

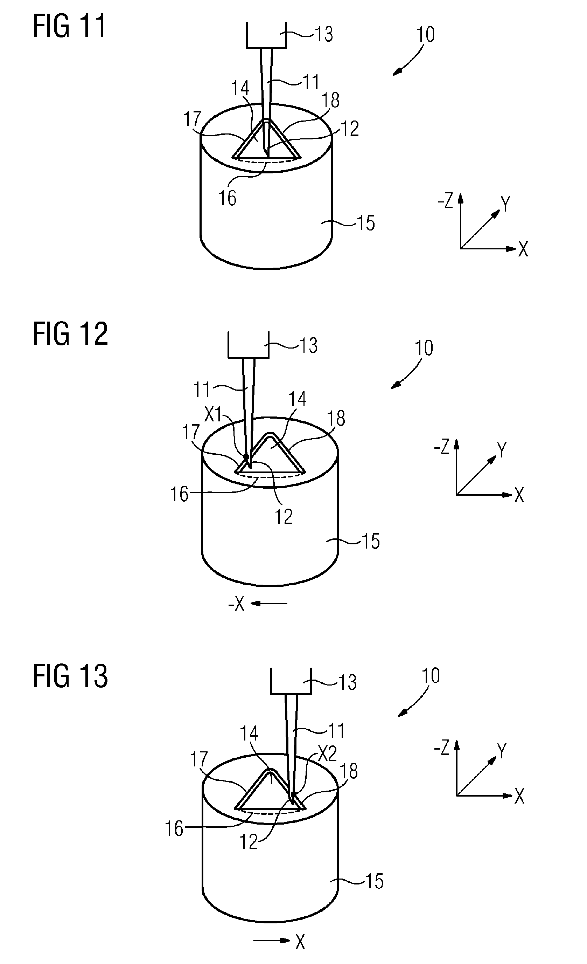

FIG. 11 zeigt die in FIG. 10 dargestellten Gegenstände, wobei sich die Pipettiernadel (11) in der Aufnahmeposition (14) befindet. Dies kann durch Verfahren der Pipettiernadel in Raumrichtung X und/oder Y und Z erreicht werden.

FIG. 12 zeigt die in FIG. 11 dargestellten Gegenstände. Mittels Verfahren der Pipettiernadel (11) in Raumrichtung minus X (-X) wird ein erster Punkt X1 durch Annäherung und/oder Anschlag der Pipettiernadel (11) an den ersten Randabschnitt (17) bestimmt.

FIG. 13 zeigt die in FIG. 11 dargestellten Gegenstände. Mittels Verfahren der Pipettiernadel (11) in Raumrichtung X wird ein zweiter Punkt X2 durch Annäherung und/oder Anschlag der Pipettiernadel (11) an den zweiten Randabschnitt (18) bestimmt. Eine genaue Bestimmung der Position der Pipettiernadel (11) in Raumrichtung X kann durch Auswertung von X1 und X2 erfolgen. Der Abstand der Punkte X2 und X1 wird ermittelt und ermöglicht die Bestimmung der Position der Pipettiernadel (11) in Raumrichtung Y durch Zuordnung des Abstandes X1 und X2 zu einer Position in Raumrichtung Y in Abhängigkeit der Form und Größe der Aufnahmeposition (14).

### BEZUGSZEICHEN

- 10: Vorrichtung zur Positionsbestimmung
- 11: Pipettiernadel
- 12: Pipettiernadelspitze
- 13: Aufhängung
- 14: Aufnahmeposition
- 15: Waschstation
- 16: Rand
- 17: Erster Randabschnitt
- 18: Zweiter Randabschnitt
- 19: Erste gedachte Linie
- 20: Zweite gedachte Linie
- X: Raumrichtung X
- Y: Raumrichtung Y
- Z: Raumrichtung Z

## Patentansprüche

1. Vorrichtung (10) zur Positionsbestimmung einer automatisch verfahrbaren Lehre in zwei unterschiedlichen Raumrichtungen X und Y, die jeweils senkrecht zur Längsachse der Lehre stehen, besagte Vorrichtung aufweisend
a) die Lehre;
b) eine Vorrichtung zum Verfahren der Lehre in der Raumrichtung X, die senkrecht zur Längsachse der Lehre steht;
c) eine Vorrichtung zum Verfahren der Lehre in einer Raumrichtung Z, die parallel zur Längsachse der Lehre verläuft;
d) einen Sensor zur Erkennung des Anschlags oder der Annäherung der Lehre an einen Gegenstand;
e) eine zumindest teilweise umrandete Aufnahmeposition (14) für die Lehre, in die die Lehre durch ein Verfahren der Lehre in Raumrichtung Z zumindest teilweise einführbar ist,
**dadurch gekennzeichnet, dass**
die Aufnahmeposition (14) für die Lehre einen ersten Randabschnitt (17) und einen zweiten Randabschnitt (18) aufweist, wobei die Randabschnitte (17, 18) die Aufnahmeposition (14) für die Lehre in Raumrichtung X derart begrenzen, dass die Aufnahmeposition (14) für die Lehre in Raumrichtung X zwischen einer ersten gedachten Linie (19), die parallel zur Raumrichtung X verläuft und einer zweiten gedachten Linie (20), die parallel zur Raumrichtung X verläuft, streng monoton abnimmt.

2. Vorrichtung (10) nach Anspruch 1, wobei die Aufnahmeposition (14) für die Lehre die Form eines Dreiecks, bevorzugt die Form eines gleichschenkligen Dreiecks aufweist.

3. Vorrichtung (10) nach Anspruch 1, wobei die Aufnahmeposition (14) für die Lehre die Form eines Zweiecks, in der Form ähnlich eines gleichschenkligen Dreiecks mit einem gerundeten Abschnitt zwischen den Schenkeln aufweist.

4. Vorrichtung (10) nach Anspruch 1, wobei die Aufnahmeposition (14) für die Lehre die Form einer halben Kreisscheibe, bevorzugt die Form einer viertel Kreisscheibe aufweist.

5. Vorrichtung (10) nach einem der vorhergehenden Ansprüche, wobei die Lehre als gerader Kreiszylinder ausgestaltet ist.

6. Vorrichtung (10) nach einem der vorhergehenden Ansprüche, wobei die Lehre eine Pipettiernadel ist.

7. Vorrichtung (10) nach einem der vorhergehenden Ansprüche, wobei die Aufnahmeposition (14) für die Lehre als Waschstation (15) ausgebildet ist.

8. Verfahren zur Positionsbestimmung einer automatisch verfahrbaren Lehre in zwei unterschiedlichen Raumrichtungen X und Y, die jeweils senkrecht zur Längsachse der Lehre stehen, umfassend die Verfahrensschritte:
a) Einführen der Lehre in eine Aufnahmeposition (14) durch Verfahren der Lehre in Raumrichtung Z, die parallel zur Längsachse der Lehre verläuft, wobei die Aufnahmeposition (14) einen ersten Randabschnitt (17) und einen zweiten Randabschnitt (18) aufweist und wobei die Randabschnitte (17, 18) die Aufnahmeposition (14) in Raumrichtung X derart begrenzen, dass die Aufnahmeposition (14) in Raumrichtung X zwischen einer ersten gedachten Linie (19), die parallel zur Raumrichtung X verläuft und einer zweiten gedachten Linie (20), die parallel zur Raumrichtung X verläuft, streng monoton abnimmt;
b) Verfahren der Lehre in Raumrichtung X bis zur Annäherung oder zum Anschlag an den ersten Randabschnitt (17) der Aufnahmeposition (14);
c) Verfahren der Lehre in Raumrichtung -X bis zur Annäherung oder zum Anschlag an den zweiten Randabschnitt (18) der Aufnahmeposition (14);
d) Ermitteln des Abstands zwischen dem ersten Randabschnitt (17) und dem zweiten Randabschnitt (18) der Aufnahmeposition (14) in Raumrichtung X entlang des Verfahrweges der Lehre;
e) Ermitteln der Position der Lehre in Raumrichtung Y durch Zuordnen des ermittelten Abstands zwischen dem ersten Randabschnitt (17) und dem zweiten Randabschnitt (18) zu einer Position in Raumrichtung Y.

9. Verfahren nach Anspruch 8, wobei die Lehre als gerader
Kreiszylinder ausgestaltet ist.

10. Verfahren nach einem der Ansprüche 8 und 9, wobei die
Aufnahmeposition (14) für die Lehre die Form eines Dreiecks, bevorzugt die Form eines gleichschenkligen Dreiecks aufweist.

11. Verfahren nach einem der Ansprüche 8 und 9, wobei die
Aufnahmeposition (14) für die Lehre die Form eines Zweiecks, in der Form ähnlich eines gleichschenkligen Dreiecks mit einem gerundeten Abschnitt zwischen den Schenkeln aufweist.

12. Verfahren nach einem der Ansprüche 8 und 9, wobei die
Aufnahmeposition (14) für die Lehre die Form einer halben Kreisscheibe, bevorzugt die Form einer viertel Kreisscheibe aufweist.

13. Verfahren nach einem der Ansprüche 8 bis 12, wobei die
Lehre eine Pipettiernadel (11) ist.

14. Verfahren nach einem der Ansprüche 8 bis 13, wobei die
Aufnahmeposition (14) für die Lehre als Waschstation (15) für die Pipettiernadel (11) ausgebildet ist.

15. Verfahren nach Anspruch 14, wobei die Pipettiernadel (11)
vor, während oder nach der Bestimmung der Position der Pipettiernadel (11) gewaschen wird.

16. Analysegerät umfassend eine Vorrichtung (10) zur
Positionsbestimmung einer automatisch verfahrbaren Lehre (11) nach einem der Ansprüche 1 bis 7 und/oder umfassend eine Vorrichtung (10) zur Durchführung eines Verfahrens nach einem der Ansprüche 8 bis 15.
